# FASCICULE DE BREVET EUROPEEN

(11) **EP 2 375 724 B1**
(45) Date de publication et mention de la délivrance du brevet: **27.06.2018**
(21) Numéro de dépôt: 11159733.2
(22) Date de dépôt: 25.03.2011
(51) Int. Cl.: H04N 5/232, G02B 27/64

(54) **Stabilisation d'images captées**
Stabilisierung eines erfassten Bildes
stabilization of captured image

(30) Priorité: 30.03.2010 FR 1052371
(43) Date de publication de la demande: 12.10.2011
(73) Titulaire: Safran Electronics & Defense, 92100 Boulogne-Billancourt (FR)
(72) Inventeur: Bousquet, Marc, 75015 Paris - FRANCE (FR); Negroni, Sylvain, 75015 Paris - FRANCE (FR)
(74) Mandataire: Cabinet Plasseraud

(56) Documents cités:
- EP-A2- 1 507 408
- WO-A2-2008/000711
- US-A- 5 861 915
- US-B1- 6 734 901

## Description

La présente invention concerne le traitement d'images et plus particulièrement la stabilisation d'images captées par un dispositif de capture d'images, tel qu'une caméra vidéo par exemple.

Lorsqu'une caméra est soumise à des mouvements involontaires, comme par exemple les mouvements du porteur de ce dispositif, les images captées peuvent être de mauvaise qualité. En effet, les mouvements involontaires de l'axe de visée de la caméra peuvent introduire un 'flou de bougé' qui affecte la qualité des images captées.

On peut envisager de se baser sur des données fournies par des gyromètres pour stabiliser l'axe de visée et ainsi éviter le flou de bougé. Dans ce cas, on applique une stabilisation d'images sur la base de données fournies par les gyromètres.

On peut alternativement prévoir de stabiliser de manière numérique les images captées, notamment en appliquant un traitement numérique d'images tel que celui décrit dans le document FR 2 828 315. Dans ce cas, la stabilisation d'images est basée sur des décalages entre les images successives qui sont déterminés par traitement numérique.

Ainsi, la stabilisation est soit basée sur des décalages fournis par des gyromètres, soit basée sur des décalages déterminés par traitement numérique appliqué sur les images à stabiliser.

Un document WO 2008/000711 décrit une méthode de stabilisation qui repose à la fois sur l'utilisation de données fournies par des gyroscopes et sur un traitement numérique des images captées. Plus précisément, selon l'enseignement de ce document, en premier lieu on détermine des décalages approximatifs entre les images successives sur la base de mesures gyrométriques, puis on détermine des décalages fins sur la base des décalages approximatifs et du flux d'images.

Ensuite, il est prévu de stabiliser les images en appliquant soit les décalages fins s'ils sont considérés comme pertinents, soit les décalages approximatifs dans le cas où les décalages fins obtenus ne seraient pas pertinents. A cet effet, on procède donc à une étape d'évaluation des décalages fins afin de déterminer s'il est pertinent de les appliquer.

Il convient de noter que certains dispositifs de stabilisation connus mettent déjà en oeuvre une stabilisation basée sur des mesures gyrométriques. Dans de tels dispositifs, la mise en oeuvre d'une méthode telle que celle décrite dans le document WO 2008/000711 requiert une modification de l'architecture existante. En effet, lorsqu'une stabilisation gyrométrique est mise en oeuvre, les décalages calculés sont appliqués aux images captées, et ainsi, en sortie de cette étape de stabilisation, on obtient des images stabilisées sur la base des mesures gyrométriques. Par conséquent, si l'on souhaite évaluer la valeur des décalages fins avant de choisir entre décalages fins et décalages approximatifs, l'architecture existante doit être modifiée.

En outre, selon l'enseignement du document WO 2008/000711, dans certains cas, la stabilisation d'images est effectuée uniquement sur les décalages approximatifs. Or, ces derniers ne permettent pas d'obtenir une stabilisation fine et précise. Ainsi, il n'est parfois pas possible d'obtenir une stabilisation performante en appliquant l'enseignement du document WO 2008/000711.

Le document EP 1507408 décrit un mécanisme de réduction de vibrations dans un système pour le traitement d'images et notamment pour l'amélioration de l'estimation d'un signal de référence pour la détection de vibrations. La présente invention vise à améliorer la situation.

Un premier aspect de la présente invention propose un procédé de stabilisation d'images captées par un dispositif de capture d'images selon un axe de visée auquel est associé un système gyrométrique adapté pour fournir des données de mesure gyrométrique relatives à l'axe de visée, ledit procédé comprenant les étapes suivantes :
/a/ obtenir une première série d'images captées ;
/b/ obtenir une seconde série d'images stabilisées par application, sur la première série d'images, d'une stabilisation d'images basée sur des informations gyrométriques ;
/c/ déterminer une erreur résiduelle de stabilisation par application d'un traitement numérique à la seconde série d'images stabilisées, basé sur une méthode de flot optique ; et
/d/ répéter les étapes /a/ à /c/ ;
dans lequel, à la première itération de l'étape /b/, les informations gyrométriques correspondent aux données de mesure fournies par le système gyrométrique, et à une itération suivante de l'étape /b/, les informations gyrométriques sont obtenues par correction, sur la base de ladite erreur résiduelle, des données fournies par le système gyrométrique.

On entend par les termes 'stabilisation d'images', une opération consistant à recaler des images successives les unes par rapport aux autres, afin de réduire ou même d'annuler les effets de mouvements de l'axe de visée au cours de la capture de ces images. En effet, entre deux images successives, l'axe de visée a pu subir des rotations de roulis, de tangage, de lacet ou encore des changement de focale, dans le cas d'une caméra dont on peut faire varier le facteur de zoom, des translations et des vibrations angulaires et linéaires. La stabilisation d'images vise donc à annuler ces mouvements qui affectent la qualité des images captées, en les compensant.

Ici, il est prévu d'un côté d'utiliser des données de mesure gyrométrique fournies par le système gyrométrique pour stabiliser les images captées, et, d'un autre côté, d'utiliser un traitement numérique pour corriger ces données de mesure gyrométrique. Ainsi, dans ces conditions, il est possible de stabiliser les images captées de manière précise sur la base des données de mesure gyroscopique corrigées. La précision et la fiabilité d'une telle stabilisation permet à la fois d'obtenir une seconde série d'image de qualité et de réduire la complexité des calculs effectués lors de la mise en oeuvre du traitement numérique à l'étape /c/. En effet, puisque la seconde série d'images présente une stabilisation fiable, l'erreur résiduelle obtenue par application du traitement numérique est aisée à déterminer.

Il convient de noter que chaque gyromètre a des paramètres caractéristiques. L'obtention de ces paramètres caractéristiques de manière précise et exacte nécessite actuellement des opérations coûteuses de mesure en phase de fabrication. De plus, ces paramètres caractéristiques qui sont mesurés lors de la fabrication peuvent ne pas être stables dans le temps. Tel est le cas notamment pour les gyromètres à bas coût. Ainsi, avantageusement, grâce à la correction rétroactive des informations gyrométriques, il est ici possible de stabiliser les images captées de manière précise même lorsque le système gyrométrique est constitué de gyromètres à bas coût.

Il est aisé pour l'homme du métier de déterminer des décalages entre les images captées afin de les stabiliser à partir de données de mesure gyrométrique brutes fournies par les gyromètres utilisés. A cet effet, on peut prévoir d'utiliser un modèle mathématique qui prend en compte un nombre plus ou moins important de paramètres caractéristiques du système gyrométrique utilisé et de son environnement de fonctionnement (température, accélérations, modèle statistique ou fréquentiel des mouvements involontaires et volontaires, ...). La précision et le nombre des paramètres caractéristiques pris en compte dans le modèle mathématique permettent d'améliorer la précision des décalages obtenus. Ensuite, sur la base d'un tel modèle, il est possible de corriger de manière pertinente et précise les données de mesure gyroscopiques fournies par le système gyroscopique, quand bien même ces données seraient fournies par des gyromètres peu précis.

En outre, il est aisément possible de mettre en oeuvre une stabilisation d'images dans le contexte d'une architecture de stabilisation déjà existante, qui est basée sur des données de mesure gyrométrique. En effet, il est simple d'ajouter en série, sans avoir à modifier l'architecture existante relative à une stabilisation reposant sur des données de mesure gyrométrique, une étape d'application de traitement numérique visant à déterminer une erreur résiduelle de stabilisation. On peut ici obtenir sur la base des données de mesure gyrométrique un décalage entre deux images captées avec une précision de l'ordre de 1 pixel, lorsque les données fournies par le système gyrométrique sont corrigées rétroactivement selon un mode de réalisation de la présente invention.

Grâce à ces corrections rétroactives, les informations gyrométriques permettent de calculer de manière précise des décalages entre les images successives captées, et non plus uniquement des décalages approximatifs, comme cela est le cas dans l'art antérieur.

Plus précisément, les informations gyrométriques indiquent les mouvements de l'axe de visée et permettent donc de recaler les images captées les unes par rapport aux autres en traduisant les mouvements de l'axe de visée sous forme de déplacement de pixels dans les images captées.

La stabilisation basée sur les données de mesure gyrométrique est une stabilisation fiable grâce à la correction rétroactive de ces données de mesure gyrométrique. Cette caractéristique permet d'obtenir une série d'images captées stabilisées avec une grande qualité quelque soit le type des scènes captées, y compris lorsqu'un traitement numérique n'est pas adapté pour calculer des décalages pertinents et fiables. Tel peut être le cas par exemple lorsque les images ne contiennent pas assez d'informations, comme une image de couleur sensiblement uniforme, ou lorsque l'image est traversée par un objet mobile ayant une vitesse élevée perturbant le calcul des décalages par traitement numérique. Dans ces cas, seuls des décalages approximatifs peuvent être appliqués dans l'art antérieur, alors qu'ici, la stabilisation obtenue est précise.

En effet, dans un mode de réalisation de la présente invention, grâce à cette correction rétroactive du système gyrométrique, la stabilisation basée sur les mouvements de l'axe de visée permet d'obtenir des résultats pertinents même dans les cas compliqués, et même si les gyromètres utilisés ne sont pas d'une grande qualité.

Selon une caractéristique supplémentaire de l'invention, le procédé de stabilisation comprend en outre, après l'étape /c/, l'étape suivante:
- obtenir une troisième série d'images stabilisées par application à la seconde série d'images stabilisées d'une seconde stabilisation d'images basée sur un traitement numérique d'images prenant en compte l'erreur résiduelle déterminée à l'étape /c/ précédente.

Ainsi, la troisième série d'images obtenue in fine présente une stabilisation d'une précision très élevée.

La stabilisation qui est basée sur un traitement numérique repose sur une analyse relative des pixels des images successives. Aucune limitation n'est attachée à un tel traitement numérique de stabilisation. On peut prévoir de déterminer des décalages entre deux images successives sur la base d'une corrélation numérique comme celle décrite dans le document FR 2 828 315, basée sur une méthode de flot optique.

Aucune limitation n'est attachée au système gyrométrique au regard de la présente invention. Un tel système peut comprend plusieurs gyroscopes. On peut par exemple prévoir d'utiliser deux gyromètres relativement à un référentiel plan d'image et un troisième gyromètre pour déterminer des informations au sujet de la rotation de l'image autour de l'axe de visée. Il est adapté pour fournir des données de mesure gyrométrique relatives au mouvement de l'axe de visée du dispositif de capture. A cet effet, on peut prévoir que le système gyrométrique est solidairement fixé à l'axe de visée du dispositif de capture.

Plus précisément, à l'étape /b/, on peut déterminer des premiers décalages entre les images captées successives sur la base des mouvements de l'axe de visée indiqués par les informations gyrométriques ; et
à l'étape /c/, on peut déterminer des seconds décalages entre images successives de la seconde série sur la base du traitement numérique d'images.

Ainsi, des premiers décalages sont déterminés sur la base d'informations gyrométriques et des seconds décalages sont déterminés sur la base d'un traitement numérique pour une éventuelle seconde stabilisation complémentaire, qui peut avantageusement permettre d'obtenir in fine un résultat très performant.

Il convient de noter ici que les premiers décalages sont calculés et appliqués en premier lieu, et de manière indépendante des seconds décalages, contrairement à l'art antérieur. Cette indépendance de calcul permet avantageusement de mettre en oeuvre aisément un mode de réalisation de la présente invention dans une architecture existante.

Dans un mode de réalisation de la présente invention, il est envisagé d'appliquer un filtrage au cours du procédé de stabilisation. La stabilisation de l'étape /b/ est alors basée sur des informations gyrométriques filtrées selon un filtre passe-bas.

Un tel filtrage vise avantageusement à filtrer les mouvements involontaires parmi tous les mouvements, volontaires et involontaires, détectés de l'axe de visée de façon à permettre de recaler les images par rapport à ces mouvements involontaires. Les mouvements volontaires sont généralement caractérisés par une amplitude forte et une fréquence faible. Un filtre passe-bas est adapté à cet effet.

Dans un mode de réalisation, on prévoit en outre de se baser sur les erreurs résiduelles de stabilisation pour modéliser certaines correction des gyromètres en fonction de paramètres extérieurs. Ainsi, on peut avantageusement modéliser une correction des gyromètres en fonction de variations de température.

En effet, dès lors qu'un capteur de température peut fournir des valeurs de température, on peut enregistrer les variations des erreurs résiduelles de stabilisation en fonction des variations de températures.

Cette modélisation est construite au cours de la mise en oeuvre du procédé et reste plus facile à effectuer qu'une modélisation de correction classiquement effectuée au moment de la construction du système gyrométrique en usine. En outre, une telle modélisation de correction selon un mode de réalisation de la présente invention peut être adaptée aux modifications que subissent les gyromètres au cours du temps puisqu'elle peut aisément être mise à jour régulièrement.

Ce type de modèle de correction peut avantageusement être utilisé par la suite sur la simple base de la connaissance de la température et non plus sur la base de l'erreur résiduelle de stabilisation.

Ainsi, dans un mode de réalisation de la présente invention, on obtient en outre un modèle de correction, en fonction des températures, des données de mesure gyrométrique sur la base des erreurs résiduelles de stabilisation obtenues.

On peut notamment prévoir de corriger les données de mesure gyroscopique sur un tel modèle de correction au début de la série des images captées, ou encore lorsque les images captées ne contiennent pas assez d'informations.

Dans un mode de réalisation de la présente invention, l'étape /b/ est basée sur des données de mesure gyrométrique filtrées sur la base des caractéristiques de l'environnement du système gyrométrique.

Il est prévu de déterminer une valeur de correction relative au système gyrométrique en fonction de l'erreur résiduelle obtenue à l'étape /c/. Cette valeur de correction peut être obtenue par application d'un filtre numérique. Ce filtre utilise les erreurs résiduelles de stabilisation mesurées par le traitement numériques d'images pour remettre à jour automatiquement les paramètres caractéristiques du système gyrométrique utilisés pour corriger les données de mesure fournies directement par le système gyrométrique.

Un deuxième aspect de la présente invention propose un dispositif de stabilisation comprenant des moyens adaptés pour mettre en oeuvre un procédé de stabilisation selon le premier aspect de la présente invention.

Un troisième aspect de la présente invention propose un système de capture d'images comprenant un dispositif de capture d'images adapté pour capter une série d'images selon un axe de visée, un système gyrométrique adapté pour fournir des données de mesure gyrométrique relatives à l'axe de visée et un dispositif de stabilisation d'images selon le deuxième aspect de la présente invention.

D'autres aspects, buts et avantages de l'invention apparaîtront à la lecture de la description d'un de ses modes de réalisation.

L'invention sera également mieux comprise à l'aide des dessins, sur lesquels :
- la figure 1 illustre les principales étapes d'un procédé selon un mode de réalisation de la présente invention ;
- la figure 2 illustre des étapes détaillées d'un procédé selon un mode de réalisation de la présente invention ;
- la figure 3 illustre dispositif de stabilisation d'images selon un mode de réalisation de la présente invention ; et
- la figure 4 illustre un filtrage selon un mode de réalisation de la présente invention.

Dans un mode de réalisation de la présente invention, un procédé de stabilisation est mis en oeuvre dans un dispositif de stabilisation qui est adapté pour recevoir une série d'images captées par un dispositif de capture d'images, tel qu'une caméra, selon un axe de visée auquel est associé un système gyrométrique. Ce dernier est associé à l'axe de visée du dispositif de capture d'images de sorte que les données de mesure fournies par le système gyrométrique indiquent des mouvements de cet axe de visées.

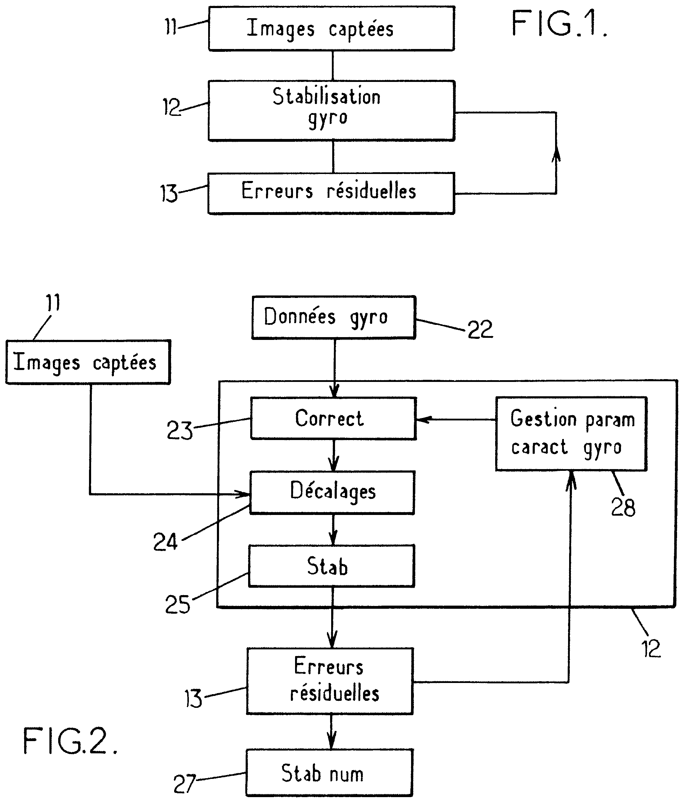

La figure 1 illustre les principales étapes d'un procédé selon un mode de réalisation de la présente invention.

Au cours de l'application de ce procédé, des images sont successivement captées par le dispositif de capture d'images et on obtient donc une première série d'images captées à une étape 11.

Le système gyrométrique fournit des données de mesure gyrométrique qui sont relatives aux mouvements de l'axe de visée du dispositif de capture. Ces données de mesure permettent donc de déterminer les mouvements que subit l'axe de visée du dispositif de capture. Toutefois, ces données de mesure peuvent être plus ou moins précises.

A une étape 12, une stabilisation est appliquée à la série d'images captées, sur la base d'informations gyrométriques. Le procédé de stabilisation est un procédé itératif. A la première étape, la stabilisation est effectuée sur la base des données de mesure gyrométriques directement fournies par le système gyrométrique. Ainsi, à l'initialisation, les informations gyroscopiques correspondent aux données de mesure brutes fournies par le système. Puis, pour la ou les itérations suivantes, ces informations gyrométriques sont avantageusement issues des données de mesure corrigées sur la base d'une erreur résiduelle telle que définie ci-après.

A cette étape 12, les informations gyrométriques sont prises en compte pour déterminer des premiers décalages entre les images captées successives. Les images captées peuvent alors être recalées les unes par rapport aux autres en se basant sur le mouvement de l'axe de visée indiqué par les informations gyrométriques. A l'issue de cette première stabilisation, on obtient une seconde série d'images.

A une étape 13, une erreur résiduelle de stabilisation est déterminée relativement à cette seconde série d'images par application d'un traitement numérique. Un tel traitement numérique peut être celui qui est décrit dans le document FR 2 828 315, basé sur une méthode de flot optique.

Ainsi, en premier lieu, à l'étape 12, on prévoit de déterminer les décalages à corriger pour stabiliser les images captées sur la base d'informations gyrométriques et, en second lieu, à l'étape 13, on prévoit de déterminer des erreurs résiduelles de décalage encore restant dans la seconde série d'images stabilisées, sur la base d'un traitement numérique.

Les erreurs résiduelles 13 sont transmises aux informations gyrométriques de sorte que la stabilisation 12 est avantageusement effectuée en prenant en compte des informations gyrométriques corrigées.

Grâce à cette étape 13 de détermination d'erreur résiduelle, les données fournies par le système gyrométrique peuvent être rétroactivement corrigé. Suivant le contexte, notamment en fonction de la précision de la stabilisation souhaitée ou encore en fonction des variations de température subies par le système gyrométrique, on peut prévoir de corriger plus ou moins souvent les données du système gyrométrique.

La figure 2 illustre un procédé de stabilisation dans un mode de réalisation de la présente invention. Dans ce procédé, la partie relative à la stabilisation gyrométrique 12 est détaillée. Ainsi, l'étape de stabilisation 12 comprend ici une sous-étape de correction 23 en charge de corriger de manière rétroactive des données de mesure 22 fournies par le système gyrométrique. A cet effet, sont prises en compte à la fois les données fournies par le système gyrométrique ainsi que des paramètres caractéristiques de ce système qui sont avantageusement mis à jour, à une étape 28, sur la base de l'étape 13.

Une sous-étape de détermination de décalages 24 entre des images successives est en charge de recevoir d'un côté les images captées successives et d'un autre côté des informations gyrométriques obtenues par correction des données de mesure. Ensuite, une sous-étape de stabilisation 25 est en charge d'appliquer les décalages déterminés à l'étape 24 aux images captées à l'étape 11.

Comme indiqué ci-dessus, ce procédé comprend une sous étape de gestion des paramètres caractéristiques 28 des gyromètres du système gyrométrique considéré ici. Cette sous étape de gestion 28 a en charge la mise à jour des paramètres caractéristiques des gyromètres du système sur la base des erreurs résiduelles de stabilisation déterminées au fil du temps à l'étape 13.

En outre, on peut prévoir ici d'appliquer une stabilisation numérique à la seconde série d'images obtenues à l'issue de l'étape 25. En effet, on peut avantageusement utiliser ici l'erreur résiduelle calculée à l'étape 13 précédente pour appliquer une seconde stabilisation 27 à la seconde série d'images afin d'obtenir une troisième série d'images stabilisées. Cette troisième série d'images peut avantageusement présenter un niveau de qualité élevé.

Il apparait clairement que le procédé selon un mode de réalisation de la présente invention peut être aisément mis en oeuvre dans une architecture déjà existante au sein de laquelle est déjà appliquée une correction de décalage d'images basée sur des données de mesure gyrométrique.

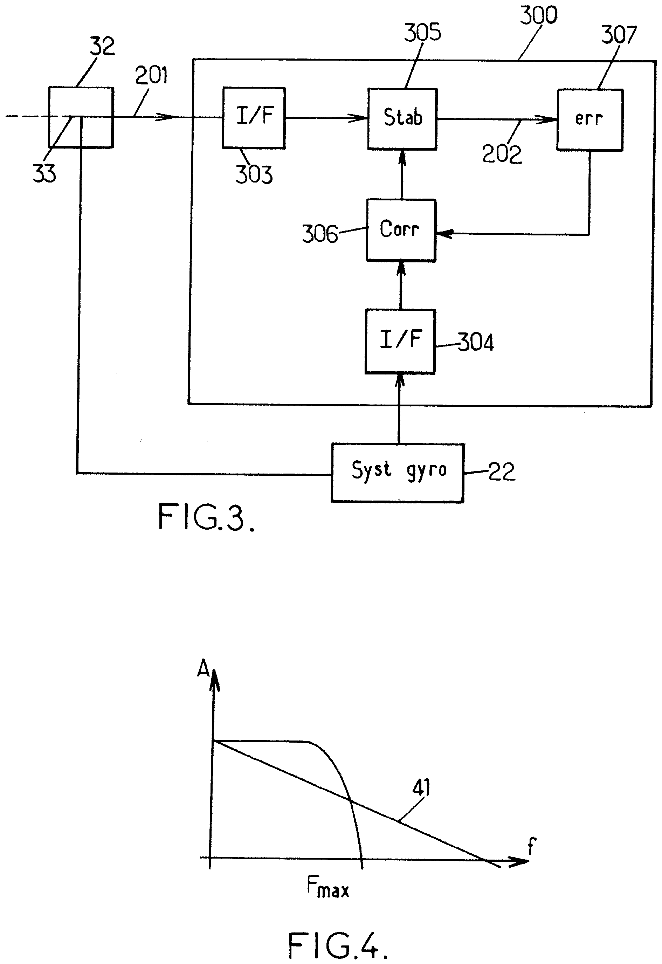

La figure 3 illustre une architecture d'un système de capture d'images selon un mode de réalisation de la présente invention comprenant un dispositif de stabilisation d'images selon un mode de réalisation de la présente invention, coopérant avec un dispositif de capture d'images et un système gyrométrique.

Un tel dispositif de stabilisation 300 d'images captées est adapté pour stabiliser des images captées par un dispositif de capture d'images 32 selon un axe de visée 33 auquel est associé un système gyrométrique 22.

Ce dispositif de stabilisation comprend :
ledit dispositif de stabilisation comprenant :
- une première unité d'interface 303 adaptée pour recevoir une première série d'images captées 201 ;
- une seconde unité d'interface 304 adaptée pour recevoir des données de mesure gyrométrique du système gyrométrique ;
- une unité de stabilisation 305 adaptée :
   - pour appliquer une stabilisation d'images basée sur des informations gyrométriques ; et
   - pour fournir une seconde série d'images 202 ;
- une unité de détermination 307 adaptée pour déterminer une erreur résiduelle de stabilisation par application d'un traitement numérique à la seconde série d'images stabilisées ;
- une unité de correction de mesure 306 adaptée pour fournir les informations gyrométriques en corrigeant les données de mesure fournies pour le système gyrométrique sur la base de l'erreur résiduelle de stabilisation.

Suivant le contexte d'utilisation d'un système de capture d'images, on peut souhaiter stabiliser les images captées par rapport à tous les mouvements de l'axe de visée. Dans ce cas, la première stabilisation peut directement prendre en compte les informations gyroscopiques telles que décrites ci-avant.

Dans d'autres contextes d'utilisation, il peut être préférable de ne stabiliser les images captées que par rapport à des mouvements involontaires de l'axe de visée, mais pas par rapport aux mouvements volontaires. A cet effet, il est possible de prévoir que les informations gyrométriques permettant de déterminer les mouvements de l'axe de visée du dispositif de capture soient filtrées.

La seconde unité d'interface 304 peut alors comprendre en outre un filtre passe-bas adapté pour filtrer les informations gyrométriques. Ce filtre passe-bas est adapté pour filtrer les mouvements volontaires et permettre ainsi un recalage (ou stabilisation) des images captées sur la base des mouvements involontaires, comme cela est décrit ci-après en référence à la figure 4.

On peut en outre prévoir d'appliquer un autre filtrage au niveau des données de mesure gyrométrique qui sont fournies par le système gyrométrique. Ce filtrage correspond à la détermination de valeurs de correction des données de mesure gyroscopique et il est mis en oeuvre au niveau de l'unité de correction de mesure 306. Ce filtre peut prendre en compte des paramètres caractéristiques des gyromètres utilisés qui peuvent être obtenus à partir des erreurs résiduelles relatives au système gyrométrique déterminées au cours de la mise en oeuvre d'un procédé selon un mode de réalisation de la présente invention.

La figure 4 illustre l'application du filtrage sur les mouvements. Les mouvements détectées par le système gyrométrique peuvent correspondre à la fois à des mouvements volontaires de l'axe de visée ainsi qu'à des mouvements involontaires. Les mouvements détectés 41 sont illustrés selon une courbe représentant la fréquence des mouvements selon l'axe des abscisses, et leur amplitude selon l'axe des ordonnées. Les mouvements ayant une fréquence supérieure à une fréquence seuil maximale Fₘₐₓ sont filtrés car ils sont considérés comme étant des mouvements involontaires.

Ce filtrage permet de stabiliser les images captées 201 relativement aux mouvements involontaires de l'axe de visée.

Avantageusement, la correction rétroactive du système gyrométrique permet d'éviter les dérives dans le temps des mesures gyrométriques et de ce fait d'obtenir une stabilisation précise quelque soient les conditions d'utilisation du système de capture d'images.

De plus, étant donné que les informations gyrométriques sont précises et fiables, l'architecture du dispositif de stabilisation selon un mode de réalisation de la présente invention permet de réduire sensiblement la complexité des calculs numériques effectués.

## Revendications

1. Procédé de stabilisation d'images captées par un dispositif de capture d'images selon un axe de visée auquel est associé un système gyrométrique (22) adapté pour fournir des données de mesure gyrométrique relatives à l'axe de visée,
ledit procédé comprenant les étapes suivantes :
/a/ obtenir (11) une première série d'images captées (201) ;
/b/ obtenir (12) une seconde série d'images stabilisées (202) par application, sur la première série d'images, d'une stabilisation d'images basée sur des informations gyrométriques ;
/c/ déterminer (13) une erreur résiduelle de stabilisation par application d'un traitement numérique à la seconde série d'images stabilisées, basé sur une méthode de flot optique ; et
/d/ répéter les étapes /a/ à /c/ ;
dans lequel, à la première itération de l'étape /b/, les informations gyrométriques correspondent aux données de mesure fournies par le système gyrométrique, et à une itération suivante de l'étape /b/, les informations gyrométriques sont obtenues par correction rétroactive, sur la base de ladite erreur résiduelle déterminée antérieurement à ladite itération suivante, des données de mesure fournies par le système gyrométrique,
le procédé de stabilisation d'images comprenant en outre, après l'étape /c/, l'étape suivante:
- obtenir une troisième série d'images stabilisées par application à la seconde série d'images stabilisées d'une seconde stabilisation d'images basée sur un traitement numérique d'images prenant en compte l'erreur résiduelle déterminée à l'étape /c/ précédente.

2. Procédé de stabilisation d'images selon la revendication 1, dans lequel, à l'étape /b/, on détermine des premiers décalages entre les images captées successives sur la base des mouvements de l'axe de visée indiqués par les informations gyrométriques ; et
dans lequel, à l'étape /c/, on détermine des seconds décalages entre images successives de la seconde série sur la base du traitement numérique d'images.

3. Procédé de stabilisation selon l'une quelconque des revendications précédentes, dans lequel les informations gyrométriques sont filtrées selon un filtre passe-bas.

4. Procédé de stabilisation selon l'une quelconque des revendications précédentes, dans lequel on obtient en outre un modèle de correction, en fonction des températures, des données de mesure gyrométrique sur la base des erreurs résiduelles de stabilisation obtenues.

5. Dispositif de stabilisation (300) d'images captées par un dispositif de capture d'images selon un axe de visée auquel est associé un système gyrométrique (301) adapté pour fournir des données de mesure gyrométrique relatives à l'axe de visée,
ledit dispositif de stabilisation comprenant :
- une première unité d'interface (303) adaptée pour recevoir une première série d'images captées (201) ;
- une seconde unité d'interface (304) adaptée pour recevoir des données de mesure gyrométrique du système gyrométrique ;
- une unité de stabilisation (305) adaptée :
- pour appliquer à la première série d'images captées une stabilisation d'images basée sur des informations gyrométriques afin d'obtenir une seconde série d'images (202) ; et
- pour fournir la seconde série d'images;
- une unité de détermination (307) adaptée pour déterminer une erreur résiduelle de stabilisation par application d'un traitement numérique à la seconde série d'images stabilisées ;
- une unité de correction rétroactive de mesure (306) adaptée pour fournir les informations gyrométriques en corrigeant les données de mesure fournies pour le système gyrométrique sur la base de l'erreur résiduelle de stabilisation,
le dispositif de stabilisation étant adapté pour mettre en oeuvre un procédé de stabilisation conforme à l'une quelconque des revendications précédentes.

6. Dispositif de stabilisation (300) d'images selon la revendication 5, dans lequel la seconde unité d'interface (304) comprend en outre un filtre passe-bas adapté pour filtrer les informations gyrométriques.

7. Système de capture d'images comprenant un dispositif de capture d'images adapté pour capter une série d'images selon un axe de visée, un système gyrométrique adapté pour fournir des données de mesure gyrométrique relatives à l'axe de visée et un dispositif de stabilisation d'images selon la revendication 5 ou 6.

## Patentansprüche

1. Verfahren zum Stabilisieren von Bildern, die von einer Bilderfassungsvorrichtung entlang einer Sichtachse erfasst werden, mit der ein gyrometrisches System (22) verbunden ist, das geeignet ist, gyrometrische Messdaten in Bezug auf die Sichtachse bereitzustellen,
wobei das Verfahren die folgenden Schritte aufweist:
/a/ Erhalten (11) einer ersten Reihe von erfassten Bildern (201);
/b/ Erhalten (12) einer zweiten Reihe von stabilisierten Bildern (202) durch Anwenden einer Bildstabilisierung auf die erste Reihe von Bildern auf der Grundlage von gyrometrischen Informationen;
/c/ Bestimmen (13) eines Restfehlers der Stabilisierung durch Anwenden einer digitalen Verarbeitung auf die zweite Reihe von stabilisierten Bildern auf der Grundlage eines optischen Flussverfahrens und
/d/ Wiederholen der Schritte /a/ bis /c/;
wobei bei der ersten Iteration von Schritt /b/ die gyrometrischen Informationen den Messdaten entsprechen, die durch das gyrometrische System bereitgestellt werden, und bei einer nachfolgenden Iteration von Schritt /b/ die gyrometrischen Informationen durch rückwirkende Korrektur auf der Grundlage des Restfehlers, der vor der nächsten Iteration bestimmt wird, der Messdaten, die von dem gyrometrischen System bereitgestellt werden, erhalten wird,
wobei das Verfahren zum Stabilisieren von Bildern ferner nach dem Schritt /c/ den folgenden Schritt aufweist:
- Erhalten einer dritten Reihe von stabilisierten Bildern durch Anwenden einer zweiten Bildstabilisierung auf die zweite Reihe von stabilisierten Bildern auf der Grundlage einer digitalen Bildverarbeitung unter Berücksichtigung des Restfehlers, der in dem vorhergehenden Schritt /c/ bestimmt wird.

2. Verfahren zum Stabilisieren von Bildern nach Anspruch 1, wobei in dem Schritt /b/ erste Abweichungen zwischen den aufeinanderfolgenden erfassten Bildern auf der Grundlage der Bewegungen der Sichtachse bestimmt werden, die durch die gyrometrischen Informationen angezeigt werden, und
wobei in dem Schritt /c/ zweite Abweichungen zwischen aufeinanderfolgenden Bildern der zweiten Reihe auf der Grundlage der digitalen Bildverarbeitung bestimmt werden.

3. Verfahren zum Stabilisieren nach einem der vorhergehenden Ansprüche, wobei die gyrometrischen Informationen nach einem Tiefpassfilter gefiltert werden.

4. Verfahren zum Stabilisieren nach einem der vorhergehenden Ansprüche, wobei ferner ein Korrekturmodell der gyrometrischen Messdaten auf der Grundlage der erhaltenen Restfehler der Stabilisierung in Abhängigkeit von den Temperaturen erhalten wird.

5. Vorrichtung zum Stabilisieren (300) von Bildern, die von einer Bilderfassungsvorrichtung entlang einer Sichtachse erfasst sind, mit der ein gyrometrisches System (301) verbunden ist, das geeignet ist, gyrometrische Messdaten in Bezug auf die Sichtachse bereitzustellen,
wobei die Vorrichtung zum Stabilisieren aufweist:
- eine erste Schnittstelleneinheit (303), die geeignet ist, eine erste Reihe von erfassten Bildern (201) zu empfangen;
- eine zweite Schnittstelleneinheit (304), die geeignet ist, gyrometrische Messdaten des gyrometrischen Systems zu empfangen;
- eine Stabilisierungseinheit (305), die geeignet ist:
- um auf die erste Reihe von erfassten Bildern eine Bildstabilisierung auf der Grundlage der gyrometrischen Informationen anzuwenden, um eine zweite Reihe von Bildern (202) zu erhalten und
- um die zweite Reihe von Bildern bereitzustellen;
- eine Einheit zum Bestimmen (307), die geeignet ist, um einen Restfehler der Stabilisierung durch Anwenden einer digitalen Verarbeitung auf die zweite Reihe von stabilisierten Bildern bestimmen;
- eine Einheit zur rückwirkenden Korrektur der Messung (306), die geeignet ist, um die gyrometrischen Informationen bereitzustellen, indem die Messdaten, die für das gyrometrische System bereitgestellt sind, auf der Grundlage des Restfehlers der Stabilisierung korrigiert werden,
wobei die Vorrichtung zum Stabilisieren geeignet ist, um ein Verfahren zum Stabilisieren gemäß einem der vorhergehenden Ansprüche umzusetzen.

6. Vorrichtung zum Stabilisieren (300) von Bildern nach Anspruch 5, wobei die zweite Schnittstelleneinheit (304) ferner einen Tiefpassfilter aufweist, der geeignet ist, um die gyrometrischen Informationen zu filtern.

7. Bilderfassungssystem, umfassend eine Bilderfassungsvorrichtung, die geeignet ist, um eine Reihe von Bildern entlang einer Sichtachse zu erfassen, ein gyrometrisches System, das geeignet ist, um gyrometrische Messdaten in Bezug auf die Sichtachse bereitzustellen, und eine Vorrichtung zum Stabilisieren von Bildern nach Anspruch 5 oder 6.

## Claims

1. A method for stabilizing images captured by an image capture device on a line of sight associated with a gyrometric system (22) designed to supply gyrometric measurement data relating to the line of sight,
said method comprising the following steps:
/a/ obtaining (11) a first series of captured images (201);
/b/ obtaining (12) a second series of stabilized images (202) by applying, to the first series of images, an image stabilization based on gyrometric information;
/c/ determining (13) a residual stabilization error by applying a digital processing to the second series of stabilized images, based on an optical stream method; and
/d/ repeating steps /a/ to /c/;
wherein, on the first iteration of step /b/, the gyrometric information corresponds to the measurement data supplied by the gyrometric system, and on a next iteration of step /b/, the gyrometric information is obtained by retroactively correcting, on the basis of said residual error determined before said next iteration, the measurement data supplied by the gyrometric system, the image stabilization method further comprising, after step /c/, the following step:
- obtaining a third series of stabilized images by applying, to the second series of stabilized images, a second image stabilization based on a digital image processing taking into account the residual error determined at the preceding step /c/.

2. The image stabilization method according to Claim 1, wherein, at step /b/, first offsets between the successive captured images are determined on the basis of the movements of the line of sight indicated by the gyrometric information; and
wherein, at step /c/, second offsets between successive images of the second series are determined on the basis of the digital image processing.

3. The image stabilization method according to one of the preceding claims, wherein the gyrometric information is filtered by a low-pass filter.

4. The image stabilization method according one of the preceding claims, wherein there is also obtained a model for correcting, according to temperatures, gyrometric measurement data on the basis of the residual stabilization errors obtained.

5. A device for stabilizing (300) images captured by an image capture device on a line of sight with an associated gyrometric system (301) designed to supply gyrometric measurement data relating to the line of sight,
said stabilization device comprising:
- a first interface unit (303) designed to receive a first series of captured images (201);
- a second interface unit (304 designed to receive gyrometric measurement data from the gyrometric system;
- a stabilization unit (305) designed:
- to apply to the first series of captured images an image stabilization based on gyrometric information in order to obtain a second series of images (202); and
- to supply the second series of images;
- a determination unit (307) designed to determine a residual stabilization error by applying a digital processing to the second series of stabilized images;
- a measurement retroactive correction unit designed to supply the gyrometric information by correcting the measurement data supplied for the gyrometric system on the basis of the residual stabilization error,
said device for stabilizing being adapted to implement a method of stabilization according to one of the preceding claims.

6. The image stabilization device (300) according to Claim 6, wherein the second interface unit (304) also comprises a low-pass filter designed to filter the gyrometric information.

7. An image capture system comprising an image capture device designed to capture a series of images on a line of sight, a gyrometric system designed to supply gyrometric measurement data relating to the line of sight and an image stabilization device according to claim 5 or 6.
